(19) Europäisches Patentamt
European Patent Office
Office européen des brevets

(11) Publication number: 0 125 766
B1

(12) **EUROPEAN PATENT SPECIFICATION**

(45) Date of publication of patent specification: 20.09.89

(51) Int. Cl.$^4$: C 07 F 9/38

(21) Application number: 84301975.3

(22) Date of filing: 23.03.84

(54) **Phosphonates.**

(30) Priority: 23.03.83 GB 8308003

(43) Date of publication of application: 21.11.84 Bulletin 84/47

(45) Publication of the grant of the patent: 20.09.89 Bulletin 89/38

(84) Designated Contracting States: AT BE CH DE FR IT LI LU NL SE

(56) References cited:
DE-A-2 800 457
US-A-3 738 937
US-A-4 164 574

Chemical Abstracts vol. 76, no. 17, 24 April 1972, Columbus, Ohio, USA; G.B. HATCH "Aminomethylenephosphonate-zinc mixtures control oxygen corrosion", page 276, column 2, abstract no. 103603x.

(73) Proprietor: Albright & Wilson Limited
Albright & Wilson House Hagley Road West
Oldbury Warley West Midlands, B68 0NN (GB)

(72) Inventor: Hargreaves, Roger Geoffrey
20 Swinford Road
Stourbridge West Midlands (GB)
Inventor: Jones, Trevor Eric
8 Milverton Close
Halesowen West Midlands (GB)

(74) Representative: Wilson, Michael John et al
c/o Albright & Wilson Limited 1 Knightsbridge Green
London SW1X 7QD (GB)

EP 0 125 766 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to aqueous solutions of partially neutralised phosphonic acids which exhibit improved long term storage stability, to processes for their preparations and to processes for stabilising solutions of phosphonic acids. The phosphonic acids are useful as sequestrants for metal ions and as scale inhibitors when added in threshold quantities to aqueous media.

The amino-methylene phosphonic acids are established articles of commerce. They may be manufactured by the reaction of the appropriate polyamine with phosphorous acid and formaldehyde. The composition of these acids can be expressed as that of acids having the general formula 1

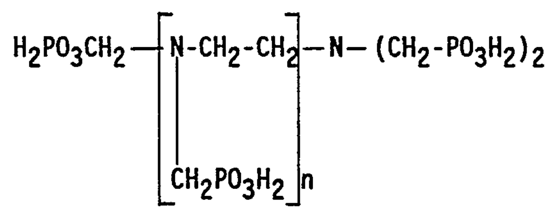

wherein n is zero or an integer having a value of from 1 to 5.

The commercial products sold as amino-methylene phosphonic acid may comprise compounds having the above general formula or they may comprise those compounds in admixture with other less highly substituted phosphonic acids, i.e. those wherein at least one of the groups $—CH_2PO_3X_2$ is replaced by a hydrogen atom or a methyl group. The term amino methylene phosphonic acids as used in this specification encompasses these mixtures as well as the pure compounds.

DE—A—2800457 describes copositions comprising (a) diethylenetriamine penta (methylene phosphonic acid) (AMP acid) (or alkali metal salts thereof) and (b) amino tris methylene phosphonic acid (or alkali metal salt thereof) with a weight amount of 5—70% of (b) to the total of (a) and (b), and their use in very low concentration as scale inhibitors in alkaline cleaning solution. There are also described in a comparative Example (Solutions 3, 4) solutions of 9 or 20 g/l of (a) in 300 g/l sodium hydroxide solution.

US—A—3738937 describes the preparation of polyalkylene polyamino poly kis (methylene phosphonic acids) and their salts and their use as scale inhibitors. Very diluted solutions of AMP acid are described in Tables I and III for corrosion inhibition and very dilute solutions of AMP acid at pH 6, 8 and 10 in Table VI for chelation and dispersion. Partial calcium salts of di hexylene triamino penta kis (methylene phosphonate) at pH 6—7.5 are described for preventing scale deposition.

US—A—4164574 describes the production of polyquaternary ammonium methylene phosphonates and their use as biocides. AMP acid may be used as an intermediate for quaternization.

Mater. Prot. Performance 1972 II (1) pp 39—42 by G. B. Hatch et al (Chem. Abs. 1972, *76*, 103603X) describes the use of very dilute solutions of complexes of zinc with the class of amino methylene phosphonates to control oxygen corrosion.

There is no disclosure in these documents of concentrated solutions of AMP acid or its salts.

The amino — methylene phosphonic acids may be prepared as crystalline solids or as solutions in an appropriate solvent which is usually water. The less soluble acids may be prepared as solids and dissolved if appropriate to a particular application. The more soluble acids are usually manufactured and sold in the form of concentrated aqueous solutions. These concentrated solutions suffer to varying degrees from a tendency of the acid to precipitate crystals of acid which detracts from their long term storage stability and is thereby disadvantageous. This invention is particularly concerned with solutions comprising diethylenetriaminepenta(methylenephosphonic acid) i.e. the phosphonic acid of the above formula 1, wherein n has a value of 2. This acid has been manufactured in the form of relatively concentrated aqueous solutions thereof. Such solutions are known to suffer from a particular tendency to precipitate solid material or to solidify completely upon long term storage. European Patent 47150 discloses that this tendency is reduced by the addition of at least 10% by weight of the solution of a mineral acid which is preferably hydrochloric acid. This addition of acid material is disadvantageous in that the resulting product is highly corrosive and also in that when the product is neutralised prior to its use, an additional quantity of base is required to neutralise the mineral acid which has been added.

The solutions comprise diethylenetriaminepenta(methylenephosphonic) acid alone or more usually a mixture of this acid with other less highly subsituted phosphonic acids as mentioned above particularly diethylenetriaminetri(methylenephosphonic acid).

The penta methylene phosphonic acid may provide a major or minor proportion of the phosphonic acids which are present. The solutions which are manufactured as commercial products will normally comprise a mixture of phosphonic acids. The preferred solutions according to the present invention are those wherein at least 25% by weight and more preferably at least 40 or 50% of the total weight of phosphorus containing species takes the form of diethylene triamine penta (methylene phosphonic acid). Most preferably from 55 to 85%, e.g. from 60 to 80% by weight of the phosphonic acid present is present as diethylenetriaminepenta(methylene phosphonic acid).

In the case of products which comprise a mixture of phosphonic acids the composition of the acid may

be assessed by titration for complexing power for metal ions. The result is conventionally expressed in terms of the amount of the pure acid which would give the identical titration result. This method of analysis produces a figure for the concentration of phosphonic acid which is commonly only 90—99% of the actual value. Alternatively, the phosphorus content of the composition may be determined and the amount of phosphonic acid calculated on the basis that all the phosphorus is present as the pure penta(methylene-phosphonic acid). This latter convention will be adopted for the purpose of the present disclosure. All statements set out herein regarding e.g. the degree of neutralisation of the acid are put forward on the basis of this convention. The statements regarding the number of replaceable hydrogen atoms which are neutralised are based upon the assumption that only phosphonate species present is the penta(methylene-phosphonic acid).

For the purpose of this disclosure the term diethylene triamine penta(methylenephosphonic acid) will be used to describe this acid and mixtures thereof with other phosphonic acids which are derived from diethylene triamine except where specifically indicated.

We have now discovered that certain salts of diethylene triamine penta(methylenephosphonic acid), wherein at least 10% and not more than 80% of the replaceable hydrogen atoms have been replaced by a water soluble monovalent cation, exhibit improved storage stability as compared to the free acid.

From one aspect, our invention provides an aqueous solution comprising at least 20% by weight of a salt of diethylenetriamine penta(methylenephosphonic acid) wherein at least 10% and not more than 80% of the replaceable hydrogen atoms (the number of replaceable hydrogen atoms being determined upon the assumption that the only phosphonate species present is the penta[methylene-phosphonic acid]) have been replaced by a water soluble monovalent cation which is an alkali metal, an organic amine or an ammonium ion, the molar ratio of monovalent cation to P atoms in the solution being 1:5 to 4:5, in order to obtain a solution which is stable upon storage at ambient temperature.

The adoption of the convention referred to above provides the other method of defining the quantity of base which is present in the solutions of the invention. The molar quantity of a monovalent cation which need be included in a particular phosphonic acid solution in order to produce a solution according to the invention will be 1:5 to 4:5 of the molar quantity of phosphorus present in the solution.

The salts of the present invention are most conveniently formed by adding the appropriate quantity of a base to a solution of the phosphonic acid in water. Bases which are appropriate for this purpose are basic derivatives of the alkali metals, e.g. sodium potassium and ammonium, and organic amines, e.g. ethanolamines, propanol amines and isopropylamine. Mixtures of these bases may be employed.

The preferred bases for addition to the acid are sodium, potassium and ammonium hydroxide or mixtures of these bases. The most preferred base is sodium hydroxide.

The quantities of base needed to produce a product having the desired degree of storage stability varies with the concentration of the phosphonic acid solution, the composition of the phosphonic acid solution and the nature of the base which is added. In general, we prefer to add sufficient base to provide a solution wherein from 10 to 30% preferably from 15 to 25%, e.g. from 18 to 22% of the replaceable hydrogen atoms represent water soluble cations. The precise preferred quantities which will provide acceptable stabilities may be determined empirically from each acid solution and each base additive. In general, where an ammonium compound is used as the base a quantity of base sufficient to provide that at least 15% and preferably at least 20% of the replaceable hydrogen atoms represent ammonium cations will be added.

Where the base used is a derivative of potassium, the quantity of base added is preferably such that at least 10% but no more than 25% and more preferably no more than 20% of the replaceable hydrogen atoms are replaced by potassium cations. Where the base used is a derivative of sodium, the quantity of base added is preferably such that at least 10% and preferably from 15 to 25% of the replaceable hydrogen atoms are replaced by sodium ions.

The more neutralised ammonium salts, i.e. the tetra ammonium salt wherein 40% of the replaceable hydrogen atoms are replaced by ammonium cations are less preferred for most purposes.

Generally the preferred solutions are those where the degree of neutralisation is lower. In the case of ammonium and especially sodium and potassium the preferred ratio of cations to phosphorus atoms is in the range of 1:5 to 3:5. In the case of the sodium and potassium ions in particular these salts exhibit improved stability as compared to salts having a higher or a lower degree of neutralisation. In the case of potassium salts the more highly neutralised salts of the more concentrated acids are less storage stable and solid material may be deposited upon long term storage. Thus the preferred ratio of potassium ions to phosphorus atoms in the novel solutions is from 2:5 to 3:5 this proportion preferably being present in a solution containing from 30 to 45% preferably from 35 to 40% by weight of active material.

In the preferred case of the sodium salts the preferred ratio of sodium ions to phosphorus atoms is also from 2:5 to 3:5. However the sodium salts are generally more stable than the corresponding potassium salts and more concentrated phosphonic acid solutions e.g. those comprising from 40 to 50% by weight of phosphonate will preferably be stabilised by the addition of sodium hydroxoide. Equally if it is desired to add a minimum quantity of base to produce a stable solution sodium hydroxide will generally be preferred a proportion of from 1:5 to 2:5 (as molar ratios of sodium ions to phosphorus atoms) being sufficient to give improve stability especially at acid concentrations of from 30 to 45% by weight of phosphonate.

The base can be added to a concentrated solution of the acid, i.e. those solutions which are available as

commercial products which comprise, e.g. from 25 to 35 or 45% by weight of active material. More conveniently the base can be added to the high concentrated phosphonic acids which are produced in the conventional manufacturing processes as hereinafter described. In this embodiment the selection of an aqueous solution of the base of the necessary concentration enables the phosphonic acid to be neutralised and diluted in a single operation.

The present invention also provides a method for stabilising a solution comprising at least 20% by weight of diethylenetriaminepenta (methylenephosphonic acid) which comprises the addition thereto of an appropriate quantity of a base so as to replace at least 10% and not more than 80% of the replaceable hydrogen ions (the number of replaceable hydrogen ions being determined upon the assumption that the only phosphonate species present is the penta[methylene-phosphonic acid]) by water soluble monovalent cations which are alkali metal, organic amine or ammonium ions, the molar ratio of cations to phosphorus atoms in the solution being 1—4:5.

The process of stabilising the acid solution by the neutralisation thereof may conveniently be carried out by adding a solution of a base thereto until the pH of the solution rises to a pre-determined level. The optimum level will vary with the composition and concentration of the acid and to a lesser degree with the nature of the base, the temperature of the solution and the instrument used to monitor the pH. Consequently the optimum pH for a particular product must be determined by experiment and the neutralisation then carried out until that pre-determined pH is reached.

The present invention is most usful when applied to acid solutions which would otherwise tend to be unstable upon prolonged storage at ambient temperatures in order to improve the stability thereof. In the case of diethylenetriaminepenta(methylene-phosphonic acid) the phosphonic acid solution may contain at least 30 and preferably at least 40, 45, or 50% of active material.

The phosphonic acid solutions may be produced using the conventional synthetic techniques. For example they can be produced by the reaction of the appropriate polyamine with phosphorous acid and formaldehyde in an aqueous reaction medium in the presence of a strong acid catalyst, e.g. hydrochloric acid. This reaction is carried out at elevated temperatures usually at least 90°C. The reaction medium may conveniently be maintained under gentle reflux for the course of the reaction. At the end of the reaction the product will comprise a significant quantity (usually about 12 to 13% by weight) of hydrochloric acid. Some of this hydrochloric acid may be removed, e.g. by distillation of the reaction product although removal of all the hydrochloric acid is impractical and usually unnecessary.

The removal of this hydrogen chloride also removes water from the phosphonic acid product. If the chloride content is reduced to less than 5% which is the preferred level the concentrated acid product will contain relatively small quantities of water an will normally be diluted to form a solution containing the preferred amounts of active material, e.g. 20 or 30 to 55% by weight of active material. As previously mentioned, this dilution and the partial neutralisation may be carried out simultaneously by diluting the concentrated acid with the appropriate quantity of an aqueous solution of a base of appropriate concentration. The product will comprise a mixture of phosphonic acids derived from the polyamine. Usually at least 60%, more usually 70 or 85% of those phosphonic acids will take the form of the fully substituted phosphonic acid, i.e. diethylenetriaminepenta(methylenephosphonic acid) itself.

The commercial phosphonic acid products also typically comprise a number of impurities. In particular they commonly contain significant quantities of chloride ion. This can be stripped out as hydrogen chloride and we prefer to utilise acids which contain less than 5% by weight of chloride ion. Solutions containing a greater proportion of chloride ion can be used (e.g. up to 10% by weight) although the quantity of base needed to achieve optimum stabilisation will increase in proportion to the amount of chloride ion which is present, because of the need to neutralise the hydrogen chloride present in the solution.

The invention is illustrated by the following Examples:—

Example 1

a) Preparation of diethylenetriaminepenta(methylenephosphonic acid) [AMP acid])

808 parts by weight of a 36% aqueous solution of formaldehyde was added to a refluxing mixture comprising 195 parts of diethylene triamine, 780 parts of phosphorous acid and 966 parts of a 36% aqueous solution of hydrochloric acid. The temperature of the mixture was maintained within the range 105°C to 115°C throughout this addition. Thereafter the reaction mixture was maintained under gentle reflux for a period of one hour.

The temprature of the reaction mixture was then raised to 125°C and aqueous hydrochloric acid was distilled off. The product was diluted with 730 parts of water to give 2007 parts of an AMP phosphonic acid solution containing 54% by weight of active material (estimated by phosphorus analysis. This solution contained approximately 5% by weight of chloride ion.

b) Neutralisation of AMP acid

28.0 parts of 47% sodium hydroxide solution was added to 100 parts of the AMP acid prepared above with thorough mixing. The resulting solution was heated so as to evaporate water therefrom until 120.0 parts of a product remained. This product contained 45% w/w of AMP acid (estimated on the assumption that all phosphorus is present as D5A or salts thereof). This product had a pH of 1.2 and was stable upon prolonged storage.

Example 2

Preparation of disodium salt of diethylenetriamine pentamethylene phosphonic acid

808 parts by weight of a 36% aqueous solution of formaldehyde was added to a refluxing mixture comprising 195 parts of diethylene triamine, 780 parts of phosphorous acid and 966 parts of a 36% aqueous solution of hydrochloric acid. The temperature of the mixture was maintained within the range 105°C to 115°C throughout the addition. Thereafter the reaction mixture was maintained under gentle reflux for a period of two hours and distilled up to a temperature of 128°C. Much of the water and hydrochloric acid was therefore removed.

600 parts of water and *475 parts of 47% caustic soda were then added to the cooled solution to yield 2370 parts of product after filtration. The product contained 45% parts w/w of AMP (estimated by phosphorus analysis), the product had a pH of 1.2 and was stable upon prolonged storage.

Example 3

The stability of the phosphonic acid solution formed as the product of Example 1 (a) and a series of partially neutralised salts obtained by the addition of various bases to it was compared.

The basic derivatives were prepared by adding the calculated quantity of base required to neutralise the free hydrochloric acid in the phosphonic acid solution and the enough base to form solutions of the mono, di, tri and tetra sodium and potassium salts containing 20, 30, 40 and 50% by weight of phosphonate.

The instability of the phosphonic acid was demonstrated by seeding the solution with solid acid and allowing the solution to stand at ambient temperature. The solution slowly solidified over a period of a few days.

The storage stability of the partially neutralised salt solutions was assessed by allowing them to stand at ambient temperature and by storing them at 0°C for a period of six months. The results of these tests are present in the following Tables:—

(a) Tests at ambient temperatures

(i) Sodium Salts

| Acid Concentration | Mono | Di | Tri | Tetra |
|---|---|---|---|---|
| 20 | ← | Soluble | | → |
| 30 | ← | Soluble | | → |
| 40 | ← | Soluble | | → |
| 50 | ← | Soluble | → | Traces of crystals formed |

* This caustic soda solution is sufficient to form the disodium salt of diethylene triamine penta (methylene phosphonic) acid itself and neutralise residual hydrochloric acid from the preparation.

(ii) Potassium Salts

| Acid Concentration | Mono | Di | Tri | Tetra |
|---|---|---|---|---|
| 20 | ← | Soluble | → | |
| 30 | ← | Soluble | → | |
| 40 | ← | Soluble | → | |
| 50 | Soluble | | Crystals formed in 4 days | Crystals formed immediately on cooling to ambient |

(b) Tests at 0°C

(i) Sodium Salts

| Acid Concentration | Mono | Di | Tri | Tetra |
|---|---|---|---|---|
| 20 | ← | Soluble | → | |
| 30 | ← | Soluble | → | |
| 40 | ← | Soluble | → | |
| 50 | Crystals after 3 Months | ← Soluble → | | Crystals in 12 days |

(ii) Potassium salts

| Acid Concentration | Mono | Di | Tri | Tetra |
|---|---|---|---|---|
| 20 | ← | Soluble | → | |
| 30 | ← | Soluble | → | |
| 40 | ← Soluble → | | | Crystals already present |
| 50 | Crystals formed after 3 Months | Crystal formed in 4 days* | | Crystals already present |

* these crystals dissolve when the solution was allowed to warm to ambient temperatures.

**Claims for the Contracting States: BE CH LI DE FR IT LU NL SE**

1. An aqueous solution comprising of a salt of diethylenetriamine penta-(methylenephosphonic acid) characterised in that the solution comprises at least 20% by weight of a salt of diethylenetriaminepenta (methylene phosphonic acid) wherein at least 10% and not more than 80% of the replaceable hydrogen atoms (the number of replaceable hydrogen atoms being determined upon the assumption that the only phosphonate species present is the penta[methylene-phosphonic acid]) have been replaced by a water soluble monovalent cation which is an alkali metal, an organic amine or an ammonium ion, the molar ratio of monovalent cation to P atoms in the solution being 1:5 to 4:5, in order to obtain a solution which is stable upon storage at ambient temperature.

2. A solution according to claim 1, characterised in that the cation is either a sodium or a potassium ion or a mixture of these ions.

3. A solution according to claim 1, characterised in that the cation is an ammonium ion.

4. A solution according to claim 1 or 2, characterised in that the molar ratio of sodium cation to P atoms is 1:5 to 3:5.

5. A solution according to claim 4 characterised in that the molar ratio of sodium cation to P atoms is about 2:5.

6. A solution according to either of claims 1 or 2, characterised in that from 10 to 30% of replaceable hydrogen atoms have been replaced by water soluble cations.

7. A solution according to either of claims 1 or 2, characterised in that from 15 to 25% of the replaceable hydrogen atoms have been replaced by sodium.

8. A solution according to any of the preceding claims, characterised in that it comprises 30—50% by weight of phosphonic acid.

9. A solution according to claim 8, characterised in that it comprises at leat 40% by weight of phosphonic acid.

10. A solution according to claim 5 or 7, characterised in that it comprises 40—50% by weight of phosphonic acid.

11. A solution according to any one of claims 1 to 10, characterised in that at least 25% by weight of the total weight of phosphorus containing species in solution is diethylenetriaminepenta-(methylene-phosphonic acid).

12. A solution according to claim 11, characterised in that at least 50% by weight of the total weight of phosphorus containing species is diethylenetriaminepenta-(methylene-phosphonic acid).

13. A solution according to claim 12, characterised in that from 55 to 85% of the total weight of phosphorus containing species is diethylenetriaminepenta (methylenephosphonic acid).

14. A solution according to any of claims 1 to 13, characterised in that the phosphonic acid solution is produced by the reaction of diethylene triamine with formaldehyde and phosphorous acid in the presence of hydrochloric acid.

15. A solution according to claim 14, characterised in that hydrogen chloride and water are removed from the reaction product.

16. A solution according to claim 15, characterised in that the chloride content of the phosphonic acid solution is less than 5% by weight.

17. A method for stabilising a solution of diethylenetriaminepenta (methylene phosphonic acid) characterized by comprising adding to an aqueous solution comprising at least 20% by weight of diethylenetriaminepenta-(methylenephosphonic acid) a quantity of a base which is sufficient to replace at least 10% and not more than 80% of the replaceable hydrogen ions (the number of replaceable hydrogen ions being determined upon the assumption that the only phosphonate species present is the penta-[methylene-phosphonic acid]) by water soluble monovalent cations which are alkali metal, organic amine or ammonium ions, the molar ratio of cations to phosphorus atoms in the solution being 1—4:5.

**Claims for the Contracting State: AT**

1. A method for stabilising a solution of diethylenetriamine penta-(methylenephosphonic acid) characterized by comprising adding to an aqueous solution thereof a quantity of base which is sufficient to replace at least 10% and not more than 80% of the replaceable hydrogen atoms (the number of replaceable hydrogen atoms being determined upon the assumption that the only phosphonate species present is the penta[methylene-phosphonic acid]) by water soluble monovalent cations which are alkali metal, organic amine or ammonium ions, the molar ratio of monovalent cations to P atoms in the solution being 1:5 to 4:5, in order to obtain a solution comprising at least 20% by weight of a salt of diethylenetriaminepenta (methylene phosphonic acid) and which is stable upon storage at ambient temperature.

2. A method according to claim 1, characterised in that the cation is either a sodium or a potassium ion or a mixture of these ions.

3. A method according to claim 1, characterised in that the cation is an ammonium ion.

4. A method according to claim 1 or 2, characterised in that the molar ratio of sodium cation to P atoms is 1:5 to 3:5.

5. A method according to claim 4 characterised in that the molar ratio of sodium cation to P atoms is

about 2:5.

6. A method according to either of claims 1 or 2, characterised in that from 10 to 30% of replaceable hydrogen atoms have been replaced by water soluble cations.

7. A method according to either of claims 1 or 2, characterised in that from 15 to 25% of the replaceable hydrogen atoms are replaced by sodium.

8. A method according to any of the preceding claims, characterised in that the solution comprises 30—50% by weight of phosphonic acid.

9. A method according to claim 8, characterised in that the solution comprises at least 40% by weight of phosphonic acid.

10. A method according to claim 5 or 7, characterised in that the solution comprises 40—50% by weight of phosphonic acid.

11. A method according to any one of claims 1 to 10, characterised in that at least 25% by weight of the total weight of phosphorus containing species in solution is diethylenetriaminepenta-(methylene-phosphonic acid).

12. A method according to claim 11, characterised in that at least 50% by weight of the total weight of phosphorus containing species is diethylenetriaminepenta-(methylene-phosphonic acid).

13. A method according to claim 12, characterised in that from 55 to 85% of the total weight of phosphorus containing species is diethylenetriaminepenta (methylenephosphonic acid).

14. A method according to any of claims 1 to 13, characterised in that the phosphonic acid solution has been produced by the reaction of diethylene triamine with formaldehyde and phosphorous acid in the presence of hydrochloric acid.

15. A method according to claim 14, characterised in that hydrogen chloride and water are removed from the reaction product.

16. A method according to claim 15, characterised in that the chloride content of the phosphonic acid solution is less than 5% by weight.

**Patentansprüche für die Vertragsstaaten: BE CH DE FR GB IT LI LU NL SE**

1. Wässerige Lösung, enthaltend ein Salz der Diethylentriamin-penta-(methylenphosphonsäure), dadurch gekennzeichnet, daß die Lösung zumindest 20 Gew.-% eines Salzes der Diethylentriamin-penta-(methylenphosphonsäure) enthält, wobei zumindest 10% und nicht mehr als 80% der ersetzbaren Wasserstoffatome [wobei die Anzahl der ersetzbaren Waserstoffatome von der Annahme bestimmt ist, daß die einzige vorliegende Phosphonat-Spezies die Penta-(methylenphosphonsäure) ist] durch ein wasserlösliches einwertiges Kation ersetzt sind, welches ein Alkalimetall-, ein organisches Amin- oder ein Ammoniumion ist, wobei das Molverhältnis von einwertigem Kation zu P-Atomen in der Lösung bei 1:5 bis 4:5 liegt, sodaß eine Lösung erhalten wird, die bei der Lagerug bei Raumtemperatur stabil ist.

2. Lösung nach Anspruch 1, dadurch gekennzeichnet, daß das Kation entweder Natrium- oder Kaliumion oder eine Mischung dieser Ionen ist.

3. Lösung nach Anspruch 1, dadurch gekennzeichnet, daß das Kation ein Ammoniumion ist.

4. Lösung nach Anspruch 1 oder 2, dadurch gekennzeichnet, daß das Molverhältnis von Natriumkation zu P-Atomen 1:5 bis 3:5 beträgt.

5. Lösung nach Anspruch 4, dadurch gekennzeichnet, daß das Molverhältnis von Natriumkation zu P-Atomen bei etwa 2:5 liegt.

6. Lösung nach einem der Ansprüche 1 oder 2, dadurch gekennzeichnet, daß 10 bis 30% der ersetzbaren Wasserstoffatome durch wasserlösliche Kationen ersetzt sind.

7. Lösung nach einem der Ansprüche 1 oder 2, dadurch gekennzeichnet, daß 15 bis 25% der ersetzbaren Wasserstoffatome durch Natrium ersetzt sind.

8. Lösung nach irgendeinem der vorhergehenden Ansprüche, dadurch gekennzeichnet, daß sie 30—50 Gew.-% Phosphonsäure enthält.

9. Lösung nach Anspruch 8, dadurch gekennzeichnet, daß sie zumindest 40 Gew.-% Phosphonsäure enthält.

10. Lösung nach Anspruch 5 oder 7, dadurch gekennzeichnet, daß sie 40 bis 50 Gew.-% Phosphonsäure enthält.

11. Lösung nach irgendeinem der Ansprüche 1 bis 10, dadurch gekennzeichnet, daß zumindest 25 Gew.-% des Gesamtgewichts der phosphorhaltigen Spezies in der Lösung Diethylentriamin-penta-(methylenphosphonsäure) ist.

12. Lösung nach Anspruch 11, dadurch gekennzeichnet, daß zumindest 50 Gew.-% des Gesamtgewichts der phosphorhaltigen Lösung Diethylentriamin-penta-(methylenphosphonsäure) ist.

13. Lösung nach Anspruch 12, dadurch gekennzeichnet, daß 55 bis 85% des Gesamtgewichts der Phosphor enthaltenden Spezies Diethylentriamin-penta-(methylenphosphonsäure) ist.

14. Lösung nach irgendeinem der Ansprüche 1 bis 13, dadurch gekennzeichnet, daß die Phosphonsäurelösung durch Umsetzung von Diethylentriamin mit Formaldehyd und Phosphorsäure in Gegenwart von Chlorwasserstoffsäure hergestellt wurde.

15. Lösung nach Anspruch 14, dadurch gekennzeichnet, daß Chlorwasserstoff und Wasser aus dem Reaktionsprodukt entfernt worden.

16. Lösung nach Anspruch 15, dadurch gekennzeichnet, daß der Chloridgehalt der Phosphonsäurelösung bei weniger als 5 Gew.-% sind.

17. Verfahren zur Stabilisierung einer Lösung von Diethylentriamin-penta-(methylenphosphonsäure), dadurch gekennzeichnet, daß man zu einer wässerigen Lösung mit einem Gehalt von zumindest 20 Gew.-% Diethylentriamin-penta-(methylenphosphonsäure) eine ausreichende Basenmenge zusetzt, um zumindest 10% und nicht mehr als 80% der ersetzbaren Wasserstoffionen [wobei die Anzahl der ersetzbaren Wasserstoffionen von der Annahme bestimmt ist, daß die einzige vorliegende Phosphonat-Spezies Penta-(methylenphosphonsäure) ist] durch wasserlösliche einwertige Kationen, die Alkalimetall-, organische Amin- oder Ammoniumionen, zu ersetzen, wobei das Molverhältnis von Kationen zu Phosphoratomen in der Lösung bei 1—4:5 liegt.

**Patentansprüche für Vertragsstaat: AT**

1. Verfahren zur Stabilisierung einer Lösung von Diethylentriamin-penta-(methylenphosphonsäure), dadurch gekennzeichnet, daß man zu einer wässerigen Lösung derselben eine ausreichende Basenmenge zusetzt, um zumindest 10% und nicht mehr als 80% der ersetzbaren Wasserstoffatome [wobei die Anzahl der ersetzbaren Wasserstoffatome von der Annahme bestimmt ist, daß die einzige vorliegende Phosphonat-Spezies die Penta-(methylenphosphonsäure) ist] durch wasserlösliche einwertige Kationen zu ersetzen, die Alkalimetall-, organische Amin- oder Ammoniumionen sind, wobei das Molverhältnis von einwertigen Kationen zu P-Atomen in der Lösung 1:5 bis 4:5 beträgt, wodurch eine Lösung erhalten wird, die zumindest 20 Gew.-% eines Salzes der Diethylentriamin-penta-(methylenphosphonsäure) enthält und die bei Lagerung bei Raumtemperatur stabil ist.

2. Verfahren nach Anspruch 1, dadurch gekennzeichnet, daß das Kation entweder Natrium- oder Kaliumion oder eine Mischung dieser Ionen ist.

3. Verfahren nach Anspruch 1, dadurch gekennzeichnet, daß das Kation ein Ammoniumion ist.

4. Verfahren nach Anspruch 1 oder 2, dadurch gekennzeichnet, daß das Molverhältnis von Natriumkation zu P-Atomen 1:5 bis 3:5 beträgt.

5. Verfahren nach Anspruch 4, dadurch gekennzeichnet, daß das Molverhältnis von Natriumkation zu P-Atomen bei etwa 2:5 liegt.

6. Verfahren nach einem der Ansprüche 1 oder 2, dadurch gekennzeichnet, daß 10 bis 30% der ersetzbaren Wasserstoffatome durch wasserlösliche Kationen ersetzt werden.

7. Verfahren nach einem der Ansprüche 1 oder 2, dadurch gekennzeichnet, daß 15 bis 25% der ersetzbaren Wasserstoffatome durch Natrium ersetzt sind.

8. Verfahren nach irgendeinem der vorhergehenden Ansprüche, dadurch gekennzeichnet, daß die Lösung 30—50 Gew.-% Phosphonsäure enthält.

9. Verfahren nach Anspruch 8, dadurch gekennzeichnet, daß die Lösung zumindest 40 Gew.-% Phosphonsäure enthält.

10. Verfahren nach Anspruch 5 oder 7, dadurch gekennzeichnet, daß die Lösung 40—50 Gew.-% Phosphonsäure enthält.

11. Verfahren nach irgendeinem der Ansprüche 1 bis 10, dadurch gekennzeichnet, daß zumindest 25 Gew.-% des Gesamtgewichts der phosphorhaltigen Spezies in der Lösung Diethylentriamin-penta-(methylenphosphonsäure) ist.

12. Verfahren nach Anspruch 11, dadurch gekennzeichnet, daß zumindest 50 Gew.-% des Gesamtgewichts der phosphorhaltigen Spezies Diethylentriamin-penta-(methylenphosphonsäure) ist.

13. Verfahren nach Anspruch 12, dadurch gekennzeichnet, daß 55 bis 85% des Gesamtgewichts der Phosphor enthaltenden Spezies Diethylentriamin-penta-(methylenphosphonsäure) ist.

14. Verfahren nach irgendeinem der Ansprüche 1 bis 13, dadurch gekennzeichnet, daß die Phosphonsäurelösung durch Reaktion von Diethylentriamin mit Formaldehyd und Phosphorsäure in Gegenwart von Chlorwasserstoffsäure hergestellt worden ist.

15. Verfahren nach Anspruch 14, dadurch gekennzeichnet, daß Chlorwasserstoff und Wasser aus dem Reaktionsprodukt entfernt worden sind.

16. Verfahren nach Anspruch 15, dadurch gekennzeichnet, daß der Chloridgehalt der Phosphonsäurelösung bei weniger als 5 Gew.-% liegt.

**Revendications pour les Etats contractants: BE CH DE FR GB IT LI LU NL SE**

1. Solution aqueous comprenant un sel d'acide diéthylènetriamine penta-(méthylène phosphonique), caractérisée en ce qu'elle comprend au moins 20% en poids d'un sel d'acide diéthylènetriamine penta-(méthylène phosphonique) dans lequel au moins 10% et pas plus de 80% des atomes d'hydrogène remplaçables) (le nombre des atomes d'hydrogène remplacables) étant déterminé en supposant que la seule espèce de phosphonate présente est l'acide penta-(méthylène phosphonique) ont été remplacés par un cation monovalent soluble dans l'eau, étant un ion de métal alcalin, d'une amine organique ou d'ammonium, le rapport molaire entre le cation monovalent et les atomes de P dans la solution étant de 1:5 à 4:5, pour obtenir une solution qui est stable à l'entreposage à température ambiante.

2. Solution suivant la revendication 1, caractérisée en ce que le cation est un ion de sodium ou de

potassium ou un mélange de ces ions.

3. Solution suivant la revendication 1, caractérisée en ce que le cation est un ion d'ammonium.

4. Solution suivant la revendication 1 ou 2, caractérisée en ce que le rapport molaire entre la cation de sodium et les atomes de P est de 1:5 à 3:5.

5. Solution suivant la revendication 4, caractérisée en ce que le rapport molaire entre la cation de sodium et les atomes de P est d'environ 2:5.

6. Solution suivant l'une quelconque des revendications 1 ou 2, caractérisée en ce que 10 à 30% des atomes d'hydrogène remplaçables ont été remplacés par des cations solubles dans l'eau.

7. Solution suivant l'une quelconque des revendications 1 et 2, caractérisée en ce que 15 à 25% des atomes d'hydrogène remplaçables ont été remplacés par le sodium.

8. Solution suivant l'une quelconque des revendications précédentes, caractérisée en ce qu'elle comprend 30 à 50% en poids d'acide phosphonique.

9. Solution suivant la revendication 8, caractérisée en ce qu'elle comprend au moins 40% en poids d'acide phosphonique.

10. Solution suivant la revendication 5 ou 7, caractérisée en ce qu'elle comprend 40 à 50% en poids d'acide phosphonique.

11. Solution suivant l'une quelconque des revendications 1 à 10, caractérisée en ce que l'acide diéthylènetriamine penta-(méthylène phosphonique) représente au moins 25% en poids par rapport au poids total de l'espèce contenant du phosphore.

12. Solution suivant la revendication 11, caractérisée en ce que l'acide diéthylènetriamine penta-(méthylène phosphonique) représente au moins 50% en poids par rapport au poids total de l'espèce contenant du phosphore.

13. Solution suivant la revendication 12, caractérisée en ce que l'acide diéthylènetriamine penta-(méthylène phosphonique) représente au moins 55 à 85% du poids total de l'espèce contenant du phosphore.

14. Solution suivant l'une quelconque des revendications 1 à 13, caractérisée en ce que la solution d'acide phosphonique est produite par la réaction de la diéthylènetriamine avec le formaldéhyde et l'acide phosphoreux en présence d'acide chlorhydrique.

15. Solution suivant la revendication 14, caractérisée en ce que le chlorure d'hydrogène et l'eau sont enlevés du produit de réaction.

16. Solution suivant la revendication 15, caractérisée en ce que la teneur en chlore de la solution d'acide phosphonique est inférieure à 5% en poids.

17. Procédé de stabilisation d'une solution d'acide diéthylènetriamine penta-(méthylène phosphonique), caractérisé en ce qu'il comprend l'addition à une solution aqueuse comprenant au moins 20% en poids d'acide diéthylènetriamine penta-(méthylène phosphonique), d'une quantité d'une base qui est suffisante pour emplacer au moins 10% et pas plus de 80% des ions d'hydrogène remplaçables (le nombre d'ions d'hydrogène remplaçables étant déterminé en supposant que la seule espèce de phosphonate présente est l'acide penta [méthylène phosphonique]) par des cations monovalents solubles dans l'eau qui sont des ions de métaux alcalins, des ions d'amine organique ou d'ammonium, le rapport molaire des cations aux atomes de phosphore dans la solution étant de 1 à 4:5.

**Revendications pour l'Etat contractant: AT**

1. Procédé de stabilisation d'une solution d'acide diéthylènetriamine penta-(méthylène phosphonique), caractérisé en ce qu'il comprend l'addition à une solution aqueuse de cet acide, d'une quantité de base qui est suffisante pour remplacer au moins 10% et pas plus de 80% des atomes d'hydrogène remplaçables (le nombre des atomes d'hydrogène remplaçables étant déterminé en supposant que la seule espèce de phosphonate présente est l'acide penta [méthylène phosphonique]) par des cations monovalents solubles dans l'eau, étant des ions de métal alcalin, d'une amine organique ou d'ammonium, le rapport molaire entre la cation monovalent et les atomes de P dans la solution étant de 1:5 à 4:5, pour obtenir une solution comprenant au moins 20% en poids d'un sel d'acide diéthylènetriamine penta-(méthylène phosphonique) et qui est stable à l'entreposage à température ambiante.

2. Procédé suivant la revendication 1, caractérisé en ce que le cation est un ion de sodium ou de potassium ou un mélange de ces ions.

3. Procédé suivant la revendication 1, caractérisé en ce que le cation est un ion d'ammonium.

4. Procédé suivant la revendication 1 ou 2, caractérisé en ce que le rapport molaire entre la cation de sodium et les atomes de P est de 1:5 à 3:5.

5. Procédé suivant la revendication 4, caractérisé en ce que le rapport molaire entre la cation de sodium et les atomes de P est d'environ 2:5.

6. Procédé suivant l'une quelconque des revendications 1 ou 2, caractérisé en ce que 10 à 30% des atomes d'hydrogène remplaçables sont remplacés par des cations solubles dans l'eau.

7. Procédé suivant l'une quelconque des revendications 1 et 2, caractérisé en ce que 15 à 25% des atomes d'hydrogène remplaçables sont remplacés par le sodium.

8. Procédé suivant l'une quelconque des revendications précédentes, caractérisé en ce que la solution comprend 30 à 50% en poids d'acide phosphonique.

9. Procédé suivant la revendication 8, caractérisé en ce que la solution comprend au moins 40% en poids d'acide phosphonique.

10. Procédé suivant la revendication 5 ou 7, caractérisé en ce que la solution comprend 40 à 50% en poids d'acide phosphonique.

11. Procédé suivant l'une quelconque des revendications 1 à 10, caractérisé en ce que l'acide diéthylènetriamine penta-(méthylène phosphonique) représente au moins 25% en poids par rapport au poids total de l'espèce contenant du phosphore.

12. Procédé suivant la revendication 11, caractérisé en ce que l'acide diéthylènetriamine penta-(méthylène phosphonique) représente au moins 50% en poids par rapport au poids total de l'espèce contenant du phosphore.

13. Procédé suivant la revendication 12, caractérisé en ce que l'acide diéthylènetriamine penta-(méthylène phosphonique) représente au moins 55 à 85% du poids total de l'espèce contenant du phosphore.

14. Procédé suivant l'une quelconque des revendications 1 à 13, caractérisé en ce que la solution d'acide phosphonique a été produite par la réaction de la diéthylènetriamine avec le formaldéhyde et l'acide phosphoreux en présence d'acide chlorhydrique.

15. Procédé suivant la revendication 14, caractérisé en ce que le chlorure d'hydrogène et l'eau sont enlevés du produit de réaction.

16. Procédé suivant la revendication 15, caractérisé en ce que la teneur en chlore de la solution d'acide phosphonique est inférieure à 5% en poids.